# EUROPÄISCHE PATENTSCHRIFT

(11) **EP 1 807 274 B1**
(45) Veröffentlichungstag und Bekanntmachung des Hinweises auf die Patenterteilung: **25.11.2009**
(21) Anmeldenummer: 05801456.4
(22) Anmeldetag: 10.10.2005
(51) Int. Cl.: B60J 7/14, B60J 7/02

(54) **FAHRZEUG MIT EINEM UMWANDELBAREN DACH**
VEHICLE WITH A CONVERTIBLE ROOF
VEHICULE EQUIPE D'UN TOIT CONVERTIBLE

(30) Priorität: 15.10.2004 DE 102004050514
(43) Veröffentlichungstag der Anmeldung: 18.07.2007
(73) Patentinhaber: Webasto AG, 82131 Stockdorf (DE)
(72) Erfinder: SCHUETT, Thomas, 82256 Fürstenfeldbruck (DE); MIKLOSI, Stefan, 81247 München (DE)
(86) Internationale Anmeldenummer: PCT/DE2005/001822
(87) Internationale Veröffentlichungsnummer: WO 2006/039911

(56) Entgegenhaltungen:
- EP-A- 0 967 100
- EP-A- 1 334 859
- DE-A1- 3 639 376
- DE-A1- 4 320 603
- FR-A- 2 693 956

## Beschreibung

Die Erfindung betrifft ein Fahrzeug mit einem umwandelbaren Dach gemäß dem Oberbegriff des Anspruchs 1. Ein derartiges Fahrzeug ist beispielsweise ein Cabriolet mit einem verstellbaren Hardtopdach.

Die EP 1 334 859 A1 offenbart ein Fahrzeug mit einem absenkbaren, mehrfach verstellbaren Dach und einer Heckklappe zur Aufnahme wenigstens eines Teils des Daches. Das Dach weist ein Vorderteil und ein Hinterteil auf, die bezüglich zwei verschiedener Drehachsen drehbar sind.

Die DE 36 39 376 A1 offenbart eine Fahrzeugkarosserie mit zusammenklappbarem Verdeck umfassend ein starres vorderes Dachpaneel, welches den vorderen Kopfteil des Fahrgastraums überdeckt, und ein hinteres Dachpaneel, welches den hinteren Teil des Fahrgastraumes überdeckt, und das vordere Dachpaneel wird von einem schwenkbaren Pfosten mit umgekehrter U-Form gelagert und das hintere Dachpaneel ist über Halterungsarme an der hinteren Karosseriestruktur angebracht. Das vordere und das hintere Dachpaneel werden in den hinteren Karosserieabschnitt hintereinander angeordnet nebeneinander eingezogen.

Aus der US 5,209,544 ist ein derartiges Fahrzeug mit einem umwandelbaren Dach bekannt geworden, dessen vorderes Dachteil und hinteres Dachteil um zwei karosseriefeste Schwenkachsen in einen Ablageraum einschwenkbar sind, der sich hinter den Sitzen abwärts erstreckt und in dem die beiden Dachteile mit ihren Hinterrändem voraus in schräger Stellung abgelegt sind. Die Lagerung der beiden Dachteile erfolgt mittels jeweiliger Hebelmechaniken bei aufwändigen Bewegungsabläufen. So wird das hintere Dachteil beim Ablegen durch Verstellen der Hebelmechanik zunächst angehoben, damit ein Verdeckkastendeckel zur Freigabe einer Verdeckkastenöffnung nach hinten bewegt werden kann.

Aus der DE 100 01 958 A1 ist ein Fahrzeug mit einem umwandelbaren Dach bekannt geworden, bei dem ein vorderes Dachteil und ein hinteres Dachteil mittels einer jeweiligen Hebeleinrichtung an der Karosserie bewegbar gelagert ist und in einem Heckablageraum in im wesentlicher vertikaler Ausrichtung abgelegt sind. Beim Ablegen des Daches wird zunächst nur das hintere Dachteil über einen eigenen Antrieb in den Ablageraum verschwenkt. Nachdem eine Stauraumabdeckung gegen das abgelegte hintere Dachteil verschwenkt worden ist, wird das vordere Dachteil über seinen eigenen Antrieb in den Ablageraum eingeschwenkt. Dieser sequenzielle Bewegungsablauf der beiden Dachteile erfordert längere Bewegungszeiten beim Öffnen und Ablegen des Daches und eine vergleichsweise komplexe und aufwändige Mechanik für die Dachverstellung.

Der Erfindung liegt die Aufgabe zugrunde, ein eingangs genanntes Fahrzeug zu schaffen, dessen bewegbare Dachteile bei in einfacher Weise gestalteter Lagerung und in einfach ausführbarem Bewegungsablauf zwischen der Schließstellung und der Offenstellung des Daches zu verstellen sind.

Die Aufgabe wird bei dem oben genannten Fahrzeug erfingdungsgemäß durch die Merkmale des kennzeichnenden Teils von Anspruch 1 gelöst. Durch die reine Schwenkbewegung der beiden Dachteile ergibt sich ein besonders einfacher Bewegungsablauf der Dachteile, der dementsprechend mittels einfach gestalteter Lagereinrichtungen für die Dachteile ausführbar ist. Somit sind keine aufwändigen Lenkereinrichtungen zum Lagern und Verschwenken der beiden Dachteile erforderlich und die Lagereinrichtungen sind weniger störanfällig und einfacher zu steuern. Das Hauptlager kann aus einem oder mehreren karosseriefesten Teilen gebildet sein.

Vorteilhafte Ausgestaltungen der Erfindung sind in den Unteransprüchen angegeben.

Besonders vorteilhaft ist es, wenn die Schwenkbewegungen der beiden Dachteile zwischen der Schließstellung und der Ablagestellung simultan erfolgen. Dann können die beiden Dachteile mit nur einer Antriebseinrichtung gekoppelt sein, wodurch sowohl der Beginn wie auch das Ende der Schwenkbewegungen der beiden Dachteile gleichzeitig erfolgen kann. Bei dieser Gestaltung kann auf eine aufwändige Steuerungseinrichtung verzichtet werden. Eine Fehlfunktion mit möglicher Kollisionsgefahr der beiden Dachteile wird dadurch vermieden.

Wenn die beiden parallelen Schwenkachsen der Dachteile voneinander beabstandet sind, kann in Abhängigkeit der Gestaltung des Daches und des Fahrzeugs eine optimierte Positionierung der Dachteile für die Ablagebewegung auch für unterschiedliche Anordnungen der Dachteile festgelegt werden. Grundsätzlich ist jedoch auch eine koaxiale Anordnung der beiden Schwenkachsen möglich. Zweckmäßigerweise ist die Schwenkachse des vorderen Dachteils vor der Schwenkasche des hinteren Dachteils und insbesondere oberhalb der hinteren Schwenkachse angeordnet, um eine einfache kollisionsfreie Ablagebewegung zu gewährleisten.

Grundsätzlich sind die Schwenkachsen derart angeordnet, daß im Ablageraum das vordere Dachteil über dem hinteren Dachteil angeordnet ist, so daß zunächst das hintere Dachteil und danach das vordere Dachteil in den Ablageraum einschwenkt.

Der Schwenkwinkel des vorderen Dachteils und des hinteren Dachteils liegt im Bereich von etwa 180°, wenn die beiden Dachteile in Schließstellung in etwa horizontal ausgerichtet sind und im Ablageraum in umgeschwenkter Stellung gleichfalls in etwa horizontal angeordnet sind. Bei hiervon abweichender Gestaltung kann selbstverständlich der Schwenkwinkel dementsprechend abweichen.

Eine besonders bevorzugte und einfache Gestaltung sieht vor, daß die Lagereinrichtungen des vorderen Dachteils und des hinteren Dachteils feste Abstützungen des jeweiligen Dachteils am zugeordneten karosserieseitigen Schwenklager aufweisen, wobei die feste Abstützung jedes Dachteils z. B. mittels beidseits am Dachteil fest angebrachter Lager- oder Stützarme erfolgt, die am Schwenklager abgestützt sind. Jedoch können die Dachteile auch integral geformte Lagerabschnitte aufweisen.

Bevorzugt ist es, wenn eine Antriebseinrichtung zum Verstellen der beiden Dachteile sowohl mit dem vorderen Dachteil wie auch mit dem hinteren Dachteil in Antriebsverbindung ist, jedoch kann auch jedes Dachteil mit einem Antrieb gekoppelt sein, wobei durch eine Steuerungseinrichtung die simultane Verschwenkbewegungen der beiden Dachteile erzeugt wird.

Eine einfache bevorzugte Gestaltung sieht vor, daß die Lagereinrichtung jedes Dachteils ein Zahnrad oder ein Zahnsegment aufweist, das am Schwenklager angeordnet ist und mit der Lagereinrichtung bzw. dem Dachteil drehfest verbunden ist, und daß die Antriebseinrichtung zum Verstellen der beiden Dachteile mittels mindestens eines Antriebszahnrades mit beiden Zahnrädern oder den Zahnsegmenten gleichzeitig in Antriebseingriff ist. Diese mechanische Kopplung kann bei kleinem Bauraum die erforderlichen Antriebskräfte übertragen.

Andererseits können die Lagereinrichtungen der beiden Dachteile auch über Lenkergetriebe oder Koppellenker mit der Antriebseinrichtung zum Verstellen der beiden Dachteile gekoppelt sein.

Die Antriebseinrichtung zum Verstellen der beiden Dachteile kann einen Hydraulikzylinder, einen Elektromotor oder auch andere geeignete Antriebe aufweisen. Der Hydraulikzylinder kann über Koppellenker oder über ein rotatorisches Element wie z. B. ein Zahnrad oder ein Zahnsegment mit den Lagereinrichtungen der beiden Dachteile gekoppelt sein.

Die beiden Dachteile enthalten bevorzugt feste Dachschalen, können grundsätzlich auch Rahmenkonstruktionen mit einer Bespannung oder Mischformen sein.

Zweckmäßigerweise ist ein Deckel des Ablageraums oder Verdeckkastendeckel im Bereich seines Hinterrandes am Fahrzeug schwenkbar gelagert und vor dem Verschwenken der Dachteile mit seinem Vorderrand in eine Öffnungsstellung hochschwenkbar.

Nachfolgend wird das Fahrzeug anhand eines Ausführungsbeispiels unter Bezugnahme auf die Zeichnung näher erläutert. Es zeigt:
- Fig. 1: in einer Seitenansicht in schematischer Teildarstellung ein Fahrzeug mit einem in Schließstellung angeordneten Hardtop-Dach, das ein vorderes Dachteil und ein hinteres Dachteil enthält;
- Fig. 2: in einer Seitenansicht in schematischer Teildarstellung das Fahrzeug mit geschlossenem Dach und einem angehobenen Deckel eines Ablageraums für das Dach;
- Fig. 3: in einer Seitenansicht in schematischer Teildarstellung das Fahrzeug mit angehobenem Deckel, wobei die beiden Dachteile in einer verschwenkten Zwischenstellung beim Ablegen in den Ablageraum dargestellt sind;
- Fig. 4: in einer Seitenansicht in schematischer Teildarstellung das Fahrzeug mit angehobenem Deckel und in den Ablageraum eingeschwenkten Dachteilen; und
- Fig. 5: in einer Seitenansicht in schematischer Teildarstellung das Fahrzeug mit in den Ablageraum eingeschwenkten Dachteilen und wieder abgesenktem und die Dachteile im Ablageraum abdeckendem Deckel.

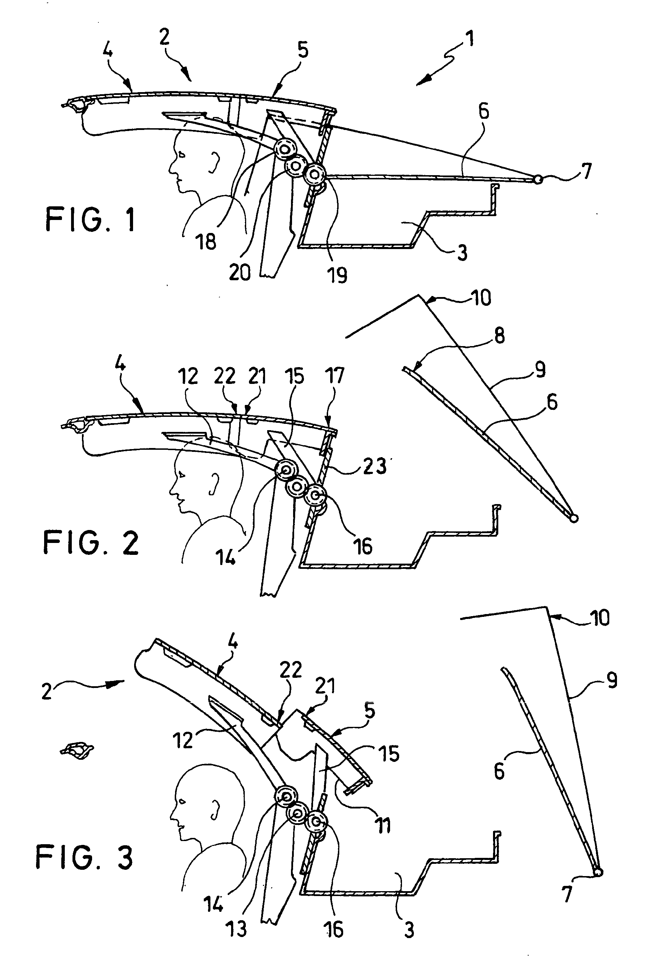

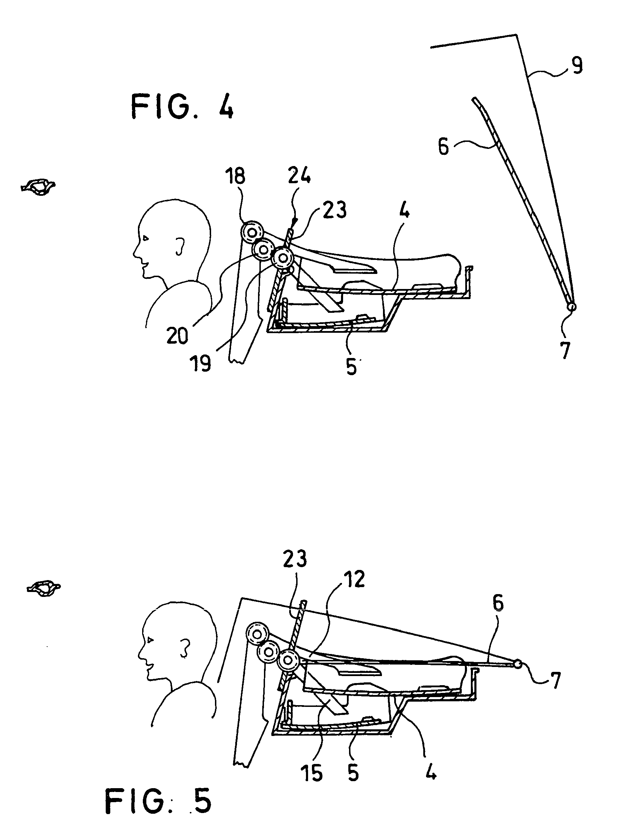

Ein Cabriolet-Fahrzeug 1 enthält (siehe Fig. 1) ein bewegbares und zum Öffnen absenkbares Dach 2, das zwischen einer den Fahrzeuginnenraum überdeckenden Schließstellung (Fig. 1 und 2) und einer Offenstellung (Fig. 5), in der es in einem heckseitigen Ablageraum oder Verdeckkasten 3 abgelegt ist, verstellbar ist. Das Dach 2 ist gemäß dem dargestellten Ausführungsbeispiel ein bewegbares Hardtop mit einem vorderen Dachteil 4 und einem hinteren Dachteil 5, die in Schließstellung hintereinander angeordnet sind und als starre Dachschalen gebildet sind. Grundsätzlich kann das Dach auch ein Softtopdach sein, bei dem das vordere und das hintere Dachteil einen Verdeckstoff tragen, oder das Dach ist eine Mischform aus Hardtopdach und Softtopdach.

An das in Schließstellung des Daches 2 hintere Dachteil 5 schließt sich ein Deckel 6 des Ablageraums 3 an, der mittels einer Lagereinrichtung (nicht dargestellt) um eine hintere Schwenkachse 7 schwenkbar gelagert ist und mit seinem Vorderrand 8 zum Freigeben einer Durchtrittsöffnung für das Dach 2 um diese Schwenkachse 7 hochgeschwenkt wird, so daß das Dach 2 in den Ablageraum 3 eingeschwenkt bzw. aus ihm ausgeschwenkt werden kann. Die Schwenkachse 7 kann an der Karosserie festgelegt sein und z. B. durch ein Gelenk in Form eines Scharniers gebildet sein oder sie ist z. B. durch ein Vier- oder Mehrgelenk gebildet und verlagert sich beim Verschwenken des Deckels 6 relativ zur Karosserie.

Der Deckel 6 des Ablageraums 3 weist zwei sich seitlich längs erstreckende und nach oben ragende Finnen 9 auf, die bei geschlossenem Dach 2 jeweils mit ihrem Vorderabschnitt 10 seitlich am hinteren Dachteil 5 anliegen, beispielsweise am eine seitliche Ausnehmung 11 des hinteren Dachteils 5 begrenzenden Rand, und bei geschlossenem hinteren Dachteil 5 gegenüber diesem verschwenkt werden können.

Das vordere Dachteil 4 ist mittels einer nach hinten ragende Verlängerung oder eines jeweiligen seitlichen Lagerarms 12, der am vorderen Dachteil 4 angebracht ist und sich von diesem nach hinten erstreckt, an einem karosserieseitigen Hauptlager 13 um eine bezüglich des Fahrzeugs in Querrichtung horizontal verlaufende Schwenkachse 14 mittels eines Schwenklagers schwenkbar gelagert. Die Schwenkachse 14 ist bevorzugt unter dem hinteren Dachteil 5 und insbesondere etwa mittig unter dem hinteren Dachteil 5 angeordnet. Das Hauptlager 13 ist ein Teil einer festen Fahrzeugstruktur, die bei einem zweisitzigen Fahrzeug seitlich neben oder hinter den Sitzen angeordnet ist und etwa bis in Höhe der Kopfstützen reicht.

Das hintere Dachteil 5 ist gleichfalls mittels jeweils eines Lagerarms 15 im Bereich seiner beiden gegenüberliegenden Seitenränder um eine bezüglich des Fahrzeugs in Querrichtung horizontal verlaufende Schwenkachse 16 schwenkbar gelagert, wobei ein die Schwenkachse 16 bildendes Schwenkgelenk ebenfalls an dem karosserieseitigen Hauptlager 13 oder einer anderen fahrzeugfesten Struktur angeordnet ist. Die Schwenkachse 16 ist bevorzugt in etwa unter dem Hinterrandbereich 17 des in Schließstellung angeordneten hinteren Dachteils 5 und bezüglich der Fahrzeuglängsrichtung sowohl hinter der Schwenkachse 14 des vorderen Dachteils 4 wie auch unterhalb dieser Schwenkachse 14 angeordnet. Die beiden Schwenkachsen 14 und 16 sind bei diesem Ausführungsbeispiel in einem solchen Abstand voneinander angeordnet, daß ein Zahnrad 18, das am Schwenkgelenk des vorderen Dachteils 4 koaxial zur Schwenkachse 14 mit dem Lagerarm 12 drehfest verbunden ist, mit einem entsprechenden an dem Lagerarm 15 des hinteren Dachteils 5 fest angebrachten Zahnrad 19 über ein Antriebszahnrad 20 in ständigem Eingriff ist. Eine Rotation des Antriebszahnrades 20 verschwenkt somit gleichzeitig und in gekoppelter Bewegung sowohl das vordere Dachteil 4 wie auch das hintere Dachteil 5. Statt der beiden Zahnräder 18 und 19 können auch dem Schwenkweg angepaßte Zahnsegmente verwendet werden.

Als Antriebseinrichtung für das Antriebszahnrad 20 ist beispielsweise ein Elektromotor oder ein Hydraulikzylinder vorgesehen (nicht dargestellt), der unmittelbar oder über ein Getriebe oder Lenkergetriebe mit dem Antriebszahnrad 20 verbunden ist. Ein rotatorischer Hydraulikzylinder als Antriebseinrichtung bildet hierbei eine integrale Baueinheit mit dem Antriebszahnrad 20.

Durch die in den Figuren schematisch dargestellte Anordnung der Schwenkachsen 14 und 16 der Lagerarme 12 bzw. 15 der beiden Dachteile 4 und 5 bewegt sich beim Öffnen des Daches 2 der Vorderrand 21 des hinteren Dachteils 5 vom Hinterrand 22 des vorderen Dachteils 4 weg (Fig. 3), so daß schon in der Anfangsphase der Öffnungsbewegung des Daches 2 keine Kollision zwischen den beiden Dachteilen 4 und 5 auftreten kann.

Die gleichzeitige, simultane Öffnungsbewegung der beiden Dachteile 4 und 5 (Bewegung des Daches 2 von Fig. 2 nach Fig. 4) läuft insbesondere auch synchron bzw. direkt gekoppelt ab, wobei die Verschwenkgeschwindigkeiten der beiden Dachteile 4 und 5 in einem festen Verhältnis zueinander stehen und insbesondere gleich oder annähernd gleich sind, wenn der Verschwenkweg der beiden Dachteile 4, 5 je nach Ausgestaltung des Daches 2 etwa eine halbe Umdrehung bzw. etwa 180° Grad beträgt. Im Ablageraum 3 liegt dann das vordere Dachteil 4 in umgeschwenkter Stellung mit seiner Oberseite nach unten weisend unter dem hinteren Dachteil 5, das gleichfalls umgeschwenkt ist und oberhalb des vorderen Dachteils 4 zu liegen kommt. Der Deckel 6 wird schließlich wieder herabgeschwenkt und deckt den das Dach 2 enthaltenden Ablageraum 3 ab (Fig. 5).

Statt einer Bewegungskopplung und -übertragung mittels der Zahnräder können auch Koppellenker oder Lenkergetriebe für die Bewegungskopplung der beiden Dachteile 4, 5 verwendet werden, die wiederum auch von linear wirkenden Antrieben antreibbar sind.

Das Fahrzeug weist eine Heckscheibe 23 auf, die an der Fahrzeugstruktur in etwa zwischen dem Hauptlager 13 und dem Ablageraum 3 im wesentlichen in vertikaler Ausrichtung fest angeordnet ist. Der Hinterrandbereich 17 des hinteren Dachteils 5 ist an die Kontur des Oberrandes 24 der Heckscheibe 23 angepaßt und legt sich bei geschlossenem Dach 2 dicht gegen den Oberrand 24 der Heckscheibe 23 an. Beim Öffnen des Daches 2 schwenkt das hintere Dachteil 4 kollisionsfrei über die Heckscheibe 23. Die Heckscheibe 23 kann auch in alternativer Gestaltung an der Karosserie in vertikaler Richtung verstellbar gelagert sein.

Grundsätzlich kann an dem vorderen Dachteil 4 wie auch an dem hinteren Dachteil 5 noch ein zusätzliches Dachteil fest angebracht oder daran bewegbar gelagert und in insbesondere synchroner Ablagebewegung mit dem zugehörigen Dachteil verstellt werden, wobei auch hier zweckmäßigerweise die Antriebsbewegung von der einen Antriebseinrichtung abgeleitet wird.

Durch die einfache Lagerung der Dachteile mittels fester Bauteile wie den beschriebenen Lagerarmen, d. h. ohne die Dachteile haltende kinematische Einrichtungen wie Viergelenke oder dergleichen, ist ein einfaches mehrteiliges Hardtop-Dach geschaffen, das ohne großen Steuerungsaufwand in simultaner Bewegung seiner Dachteile und in reiner Schwenkbewegung um die Schwenkachsen abgelegt werden kann.

### Bezugszeichenliste

- 1: Cabriolet
- 2: Dach
- 3: Ablageraum
- 4: vorderes Dachteil
- 5: hinteres Dachteil
- 6: Deckel
- 7: Schwenkachse
- 8: Vorderrand
- 9: seitliche Finne
- 10: Vorderabschnitt
- 11: Ausnehmung
- 12: Lagerarm
- 13: Hauptlager
- 14: Schwenkachse
- 15: Lagerarm
- 16: Schwenkachse
- 17: Hinterrandbereich
- 18: Zahnrad
- 19: Zahnrad
- 20: Antriebszahnrad
- 21: Vorderrand
- 22: Hinterrand
- 23: Heckscheibe
- 24: Oberrand

## Patentansprüche

1. Fahrzeug mit einem umwandelbaren Dach, das ein vorderes Dachteil (4) und ein hinteres Dachteil (5) aufweist, die zwischen einer den Fahrzeuginnenraum überdeckenden Schließstellung und einer den Fahrzeuginnenraum freigebenden Ablagestellung, in der sie in einem heckseitigen Ablageraum des Fahrzeugs abgesenkt sind, verstellbar sind,
wobei das vordere Dachteil (4) und das hintere Dachteil (5) mittels jeweiliger Lagereinrichtungen (12,15) an einem karosserieseitigen Hauptlager (13) schwenkbar gelagert sind und beim Verstellen in die Ablagestellung in reiner Schwenkbewegung um eine jeweilige feststehende Schwenkachse (14 bzw. 16) mit ihren Oberseiten nach unten umschwenken,
**dadurch gekennzeichnet,**
**dass** in Schließstellung die Schwenkachse (14) des vorderen Dachteils (4) unterhalb des Mittelabschnitts des hinteren Dachteils (5) und die Schwenkachse (16) des hinteren Dachteils (5) unterhalb des Hinterrandbereichs (17) des hinteren Dachteils (5) angeordnet sind.

2. Fahrzeug nach Anspruch 1,
**dadurch gekennzeichnet, dass** die Schwenkbewegungen der beiden Dachteile (4, 5) zwischen der Schließstellung und der Ablagestellung simultan erfolgen.

3. Fahrzeug nach Anspruch 1 oder 2,
**dadurch gekennzeichnet, dass** die beiden parallelen Schwenkachsen (14, 16) der Dachteile (4, 5) voneinander beabstandet sind.

4. Fahrzeug nach einem der Ansprüche 1 bis 3,
**dadurch gekennzeichnet, dass** die Schwenkachse (14) des vorderen Dachteils (4) vor der Schwenkasche (16) des hinteren Dachteils (5) und insbesondere oberhalb der hinteren Schwenkachse (16) angeordnet ist.

5. Fahrzeug nach einem der Ansprüche 1 bis 4,
**dadurch gekennzeichnet, dass** die Schwenkachsen (14, 16) derart angeordnet sind, dass im Ablageraum (3) das vordere Dachteil (4) über dem hinteren Dachteil (5) angeordnet ist.

6. Fahrzeug nach einem der Ansprüche 1 bis 5,
**dadurch gekennzeichnet, dass** der Schwenkwinkel des vorderen Dachteils (4) und des hinteren Dachteils (5) im Bereich von etwa 180° liegt.

7. Fahrzeug nach einem der Ansprüche 1 bis 6,
**dadurch gekennzeichnet, dass** die Lagereinrichtungen des vorderen Dachteils (4) und des hinteren Dachteils (5) feste Abstützungen (12, 15) des jeweiligen Dachteils (4, 5) am zugeordneten karosserieseitigen Schwenklager aufweisen.

8. Fahrzeug nach Anspruch 7,
**dadurch gekennzeichnet, dass** die feste Abstützung jedes Dachteils (4, 5) mittels beidseits am Dachteil fest angebrachter Lager- oder Stützarme (12, 15) erfolgt, die am Schwenklager abgestützt sind.

9. Fahrzeug nach einem der Ansprüche 1 bis 8,
**dadurch gekennzeichnet, dass** eine Antriebseinrichtung zum Verstellen der beiden Dachteile (4, 5) sowohl mit dem vorderen Dachteil (4) wie auch mit dem hinteren Dachteil (5) in Antriebsverbindung ist.

10. Fahrzeug nach einem der Ansprüche 1 bis 9,
**dadurch gekennzeichnet, dass** die Lagereinrichtung jedes Dachteils (4, 5) ein Zahnrad (18, 19) oder Zahnsegment aufweist, das am Schwenklager angeordnet ist und mit der Lagereinrichtung bzw. dem Dachteil (4, 5) drehfest verbunden ist, und dass die Antriebseinrichtung zum Verstellen der beiden Dachteile (4, 5) mittels mindestens eines Antriebszahnrades (20) mit beiden Zahnrädern (18, 19) oder Zahnsegmenten gleichzeitig in Antriebseingriff ist.

11. Fahrzeug nach einem der Ansprüche 1 bis 10,
**dadurch gekennzeichnet, dass** die Lagereinrichtungen der beiden Dachteile (4, 5) über Lenkergetriebe oder Koppellenker mit der Antriebseinrichtung zum Verstellen der beiden Dachteile (4, 5) gekoppelt ist.

12. Fahrzeug nach einem der Ansprüche 1 bis 11,
**dadurch gekennzeichnet, dass** die Antriebseinrichtung zum Verstellen der beiden Dachteile einen Hydraulikzylinder oder einen Elektromotor aufweist.

13. Fahrzeug nach Anspruch 12,
**dadurch gekennzeichnet, dass** der Hydraulikzylinder über Koppellenker oder über ein rotatorisches Element wie z. B. ein Zahnrad (20) oder ein Zahnsegment mit den Lagereinrichtungen (12, 15) der beiden Dachteile (4, 5) gekoppelt ist.

14. Fahrzeug nach einem der Ansprüche 1 bis 13,
**dadurch gekennzeichnet, dass** die beiden Dachteile (4, 5) feste Dachschalen aufweisen.

15. Fahrzeug nach einem der Ansprüche 1 bis 14,
**dadurch gekennzeichnet, dass** ein Deckel (6) des Ablageraums (3) im Bereich seines Hinterrandes am Fahrzeug schwenkbar gelagert ist und vor dem Verschwenken der Dachteile (4, 5) mit seinem Vorderrand (8) in eine Öffnungsstellung hochschwenkbar ist.

16. Fahrzeug nach Anspruch 15,
**dadurch gekennzeichnet, dass** der Deckel (6) des Ablageraums (3) seitliche nach oben ragende Finnen (9) aufweist, die bei geschlossenem Dach (2) jeweils seitlich am hinteren Dachteil (5) anliegen.

17. Fahrzeug nach einem der Ansprüche 1 bis 16,
**dadurch gekennzeichnet, dass** das Fahrzeug eine insbesondere vertikal ausgerichtete Heckscheibe (23) aufweist, die einen hinteren Abschluß des hinteren Dachteils (5) bei geschlossenem Dach (2) bildet und die unterhalb des Schwenkweges der beiden Dachteile (4, 5) liegt.

18. Fahrzeug nach Anspruch 17,
**dadurch gekennzeichnet, dass** die Heckscheibe (23) am Fahrzeug vertikal verstellbar gelagert ist.

## Claims

1. Vehicle with a convertible roof which has a front roof part (4) and a rear roof part (5) which can be displaced between a closed position covering the vehicle interior and a storage position which opens up the vehicle interior and in which said roof parts are lowered in a rear storage compartment of the vehicle, wherein the front roof part (4) and the rear roof part (5) are mounted pivotably on a main bearing (13) on the vehicle body by means of respective bearing devices (12, 15) and, during the displacement into the storage position, pivot in a pure pivoting movement with their upper sides downwards about a respective, fixed pivot spindle (14 and 16), **characterized in that**, in the closed position, the pivot spindle (14) of the front roof part (4) is arranged below the central section of the rear roof part (5) and the pivot spindle (16) of the rear roof part (5) is arranged below the rear edge region (17) of the rear roof part (5).

2. Vehicle according to Claim 1, **characterized in that** the pivoting movements of the two roof parts (4, 5) between the closed position and the storage position take place simultaneously.

3. Vehicle according to Claim 1 or 2, **characterized in that** the two parallel pivot spindles (14, 16) of the roof parts (4, 5) are spaced apart from each other.

4. Vehicle according to one of Claims 1 to 3, **characterized in that** the pivot spindle (14) of the front roof part (4) is arranged in front of the pivot spindle (16) of the rear roof part (5) and in particular above the rear pivot spindle (16).

5. Vehicle according to one of Claims 1 to 4, **characterized in that** the pivot spindles (14, 16) are arranged in such a manner that the front roof part (4) is arranged above the rear roof part (5) in the storage compartment (3).

6. Vehicle according to one of Claims 1 to 5, **characterized in that** the pivot angle of the front roof part (4) and of the rear roof part (5) is in the region of approximately 180°.

7. Vehicle according to one of Claims 1 to 6, **characterized in that** the bearing devices of the front roof part (4) and of the rear roof part (5) have fixed supports (12, 15) for the respective roof part (4, 5) on the assigned pivot bearing on the vehicle body.

8. Vehicle according to Claim 7, **characterized in that** each roof part (4, 5) is fixedly supported by means of bearing or supporting arms (12, 15) which are attached fixedly to the roof part on both sides and are supported on the pivot bearing.

9. Vehicle according to one of Claims 1 to 8, **characterized in that** a drive device for displacing the two roof parts (4, 5) is connected in terms of drive both to the front roof part (4) and to the rear roof part (5).

10. Vehicle according to one of Claims 1 to 9, **characterized in that** the bearing device of each roof part (4, 5) has a toothed wheel (18, 19) or toothed segment which is arranged on the pivot bearing and is connected in a rotationally fixed manner to the bearing device or the roof part (4, 5), and **in that** the drive device for displacing the two roof parts (4, 5) is in driving engagement simultaneously with the two toothed wheels (18, 19) or toothed segments by means of at least one toothed drive wheel (20).

11. Vehicle according to one of Claims 1 to 10, **characterized in that** the bearing devices of the two roof parts (4, 5) are coupled via link mechanisms or coupling links to the drive device for displacing the two roof parts (4, 5).

12. Vehicle according to one of Claims 1 to 11, **characterized in that** the drive device for displacing the two roof parts has a hydraulic cylinder or an electric motor.

13. Vehicle according to Claim 12, **characterized in that** the hydraulic cylinder is coupled via coupling links or via a rotatory element, such as, for example, a toothed wheel (20) or a toothed segment, to the bearing devices (12, 15) of the two roof parts (4, 5).

14. Vehicle according to one of Claims 1 to 13, **characterized in that** the two roof parts (4, 5) have fixed roof shells.

15. Vehicle according to one of Claims 1 to 14, **characterized in that** a cover (6) of the storage compartment (3) is mounted pivotably in the region of its rear edge on the vehicle and before the roof parts (4, 5) are pivoted, can be pivoted upwards at its front edge (8) into an open position.

16. Vehicle according to Claim 15, **characterized in that** the cover (6) of the storage compartment (3) has lateral upwardly protruding fins (9) which each bear laterally against the rear roof part (5) when the roof (2) is closed.

17. Vehicle according to one of Claims 1 to 16, **characterized in that** the vehicle has a rear window (23) which in particular is aligned vertically, forms a rear closure of the rear roof part (5) when the roof (2) is closed and lies below the pivoting path of the two roof parts (4, 5) .

18. Vehicle according to Claim 17, **characterized in that** the rear window (23) is mounted in a vertically displaceable manner on the vehicle.

## Revendications

1. Véhicule avec un toit convertible, qui comporte une partie de toit avant (4) et une partie de toit arrière (5) réglables entre une position fermée recouvrant l'espace intérieur du véhicule et une position rangée laissant l'espace intérieur du véhicule à l'air libre et dans laquelle les parties sont rabaissées dans un espace de rangement arrière du véhicule ;
la partie de toit avant (4) et la partie de toit arrière (5) pouvant être disposées de façon pivotante contre le palier principal (13) situé côté carrosserie à l'aide de dispositifs de palier (12, 15) respectifs et pouvant pivoter vers le bas avec leurs côtés supérieurs en cas de réglage en position rangée dans un pur mouvement de pivotement autour d'un axe de pivotement (14 et/ou 16) respectivement fixe ;
**caractérisé en ce que** :
dans la position fermée, l'axe de pivotement (14) de la partie de toit avant (4) est disposé en dessous du segment central de la partie de toit arrière (5) et **en ce que** l'axe de pivotement (16) de la partie de toit arrière (5) est disposé en dessous de la zone de bordure arrière (17) de la partie de toit arrière (5).

2. Véhicule selon la revendication 1, **caractérisé en ce que** les mouvements de pivotement des deux parties de toit (4, 5) sont effectués simultanément entre la position fermée et la position rangée.

3. Véhicule selon la revendication 1 ou 2, **caractérisé en ce que** les deux axes de pivotement (14, 16) parallèles des parties de toit (4, 5) sont disposés à une certaine distance l'une de l'autre.

4. Véhicule selon l'une quelconque des revendications 1 à 3, **caractérisé en ce que** l'axe de pivotement (14) de la partie de toit avant (4) est disposé devant l'axe de pivotement (16) de la partie de toit arrière (5) et notamment au-dessus de l'axe de pivotement (16) arrière.

5. Véhicule selon l'une quelconque des revendications 1 à 4, **caractérisé en ce que** les axes de pivotement (14, 16) sont disposés de telle sorte que la partie de toit avant (4) est disposée au-dessus de la partie de toit arrière (5) dans l'espace de rangement (3).

6. Véhicule selon l'une quelconque des revendications 1 à 5, **caractérisé en ce que** l'angle de pivotement de la partie de toit avant (4) et de la partie de toit arrière (5) est compris dans la plage avoisinant 180°.

7. Véhicule selon l'une quelconque des revendications 1 à 6, **caractérisé en ce que** les dispositifs de palier de la partie de toit avant (4) et de la partie de toit arrière (5) comportent des supports fixes (12, 15) de la partie de toit (4, 5) associée au niveau du palier pivotant situé côté carrosserie.

8. Véhicule selon la revendication 7, **caractérisé en ce que** le support fixe de chaque partie de toit (4, 5) est réalisé au moyen de bras de palier ou de soutien (12, 15) disposés fixement des deux côtés de la partie de toit fixe et supportés au niveau du palier pivotant.

9. Véhicule selon l'une quelconque des revendications 1 à 8, **caractérisé en ce qu'**un dispositif d'entraînement est en liaison d'entraînement tant avec la partie de toit avant (4) qu'avec la partie de toit arrière (5) pour régler les deux parties de toit (4, 5).

10. Véhicule selon l'une quelconque des revendications 1 à 9, **caractérisé en ce que** le dispositif de palier de chaque partie de toit (4, 5) comporte une roue dentée (18, 19) ou un segment denté disposé au niveau du palier pivotant et relié fixement sans rotation au dispositif de palier et/ou à la partie de toit (4, 5) et **en ce que** le dispositif d'entraînement est simultanément en prise d'entraînement avec les deux roues dentées (18, 19) ou segments dentés à l'aide d'au moins une roue dentée d'entraînement (20) pour régler les deux parties de toit (4, 5).

11. Véhicule selon l'une quelconque des revendications 1 à 10, **caractérisé en ce que** les dispositifs de palier des deux parties de toit (4, 5) sont couplés au dispositif d'entraînement pour le réglage des parties de toit (4, 5) via des engrenages de bras oscillant ou des bras oscillants de couplage.

12. Véhicule selon l'une quelconque des revendications 1 à 11, **caractérisé en ce que** le dispositif d'entraînement comporte un vérin hydraulique ou un moteur électrique pour régler les deux parties de toit.

13. Véhicule selon la revendication 12, **caractérisé en ce que** le vérin hydraulique est couplé aux dispositifs de palier (12, 15) des deux parties de toit (4, 5) par l'intermédiaire de bras oscillants de couplage ou d'un élément pivotant tel que, par exemple, une roue dentée (20) ou un segment denté.

14. Véhicule selon l'une quelconque des revendications 1 à 13, **caractérisé en ce que** les deux parties de toit (4, 5) comportent des coques de toit fixes.

15. Véhicule selon l'une quelconque des revendications 1 à 14, **caractérisé en ce qu'**un cache (6) de l'espace de rangement (3) est disposé de façon pivotante contre le véhicule dans la zone de son bord arrière et **en ce qu'**il peut pivoter avec son bord avant (8) dans une position ouverte, avant le pivotement des parties de toit (4, 5).

16. Véhicule selon la revendication 15, **caractérisé en ce que** le cache (6) de l'espace de rangement (3) comporte des pannes (9) saillant en côté vers le haut qui reposent, lorsque le toit (2) est fermé, respectivement en côté contre la partie de toit arrière (5).

17. Véhicule selon l'une quelconque des revendications 1 à 16, **caractérisé en ce que** le véhicule comporte une lunette arrière (23) orientée notamment verticalement qui forme une extrémité arrière de la partie de toit arrière (5) lorsque le toit (2) est fermé et reposant en dessous de la trajectoire pivotante des deux parties de toit (4, 5).

18. Véhicule selon la revendication 17, **caractérisé en ce que** la lunette arrière (23) est disposée verticalement contre le véhicule de façon réglable.
